# EUROPÄISCHE PATENTSCHRIFT

(11) **EP 1 420 180 B1**
(45) Veröffentlichungstag und Bekanntmachung des Hinweises auf die Patenterteilung: **26.09.2007**
(21) Anmeldenummer: 02102571.3
(22) Anmeldetag: 13.11.2002
(51) Int. Cl.: F16C 19/30

(54) **Axialwaelzlager mit radialer Abstützung**
Axial rolling bearing with radial support
Roulement de butée avec support radial

(43) Veröffentlichungstag der Anmeldung: 19.05.2004
(73) Patentinhaber: Ford Global Technologies, LLC, Dearborn, MI 48126 (US)
(72) Erfinder: Premiski, Vladimir, 33950 Lège Cap Ferret (FR); Fuss, Josef, 50189, Elsdorf (DE)
(74) Vertreter: Drömer, Hans-Carsten

(56) Entgegenhaltungen:
- EP-A- 0 399 259
- EP-A- 0 597 438
- DE-A- 19 535 085
- DE-C- 3 822 779
- GB-A- 1 187 290
- US-A- 5 474 390

## Beschreibung

Die Erfindung betrifft ein Axialwälzlager gemäß dem Oberbegriff des Anspruches 1.

Aus der EP 0399259 ist ein kombiniertes Axial-Radial-Wälzlager bekannt, bei dem zwischen zwei planparallelen Laufscheiben Wälzkörper angeordnet sind, wobei die Wälzkörper in den Taschen eines Lagerkäfigs in ihrer Lage zwischen den Laufscheiben gehalten werden. Beide Laufscheiben gehen an einem gemeinsamen peripheren Rand in axial gerichtete Kragen über, wobei die Kragen so aufeinander abgestimmt sind, daß ein umlaufender Ringspalt entsteht. Im Ringspalt sind weitere Wälzkörper angeordnet, ebenfalls in Taschen eines Lagerkäfigs gehalten, die eine radiale Stützung des Lagers bewirken. Ein solches Lager ermöglicht zwar eine sehr kompakte Bauweise für ein kombiniertes Axial-Radiallager mit hoher Tragfähigkeit in axialer und radialer Richtung, jedoch ist der Bauaufwand aufgrund der zwei Lagerkäfige mit den jeweiligen Wälzkörpern recht hoch.

Bei dem Axial-Wälzlager, das in der GB 1187290 offenbart ist, sind ebenfalls zwischen zwei planparallelen Laufscheiben Wälzkörper, die in Taschen eines Lagerkäfigs in ihrer Lage zwischen den Laufscheiben gehalten werden, angeordnet. Beide Laufscheiben weisen an innerem und äußerem Rand axial gerichtete Kragen auf, wobei die Kragen so angeordnet sind, daß eine äußere Laufscheibe entsteht, deren Kragen die Kragen einer inneren Laufscheibe sowohl am äußeren Rand als auch am inneren Rand überdecken. Zwischen den Kragen von innerer und äußerer Laufscheibe ist ein innerer und ein äußerer Ringspalt gebildet. In diesen Ringspalten sind Dichtungsringe angeordnet, die ein Austreten von Schmiermittel aus dem Lager verhindern. Augrund ihrer Dichtfunktion sind die Dichtungsringe aus elastischem Material gefertigt bzw. weisen in radiale Richtung eine konstruktive Elastizität auf, um die Dichtfunktion sicherzustellen. Eine solche Lageranordnung ist nicht geeignet, im Betrieb Radialkräfte aufzunehmen.

Bei einem Axialnadellager-Bauelement (DE 38 227 79 C1) mit in einem Nadelkäfig aus Blech geführten Nadeln und aus gestanztem und gezogenem Blech bestehenden Laufscheiben sind diese an ihrem Innenumfang mit aufeinander zugerichteten etwa rechtwinklig abgebogenen Kragen versehen, wobei beide Kragen einander übergreifen und miteinander über z. B. vier am Umfang verteilte radial nach außen gedrückte Sicken oder Nasen axial mit Spiel aber axial nicht trennbar verbunden sind. Dadurch, daß der eine Hülsenansatz der einen Anlaufscheibe den Hülsenansatz der anderen Anlaufscheibe axial übergreift und formschlüssig mit diesem axial mit Spiel aber axial nicht trennbar verbunden ist, können die freien ebenen Außenumfänge beider Lageranlaufscheiben mit genau dem gleichen Durchmesser und der gleichen Fassung hergestellt werden, wie sie für die Zentrierung an einem Bauteil vorgesehen ist. Außerdem ist das Axiallager während der Montage einfach handhabbar und kann ohne Beeinträchtigung der Funktion sowohl mit der einen Anlaufscheibe als auch mit der anderen Anlaufscheibe an einem außen zentrierenden Bauteil angeordnet werden.

Aus der Druckschrift DE 195 35 085 A1 ist ein Axialwälzlager, bestehend aus einem Wälzkörper in Taschen enthaltenden Käfig, der zwischen zwei planparallelen, dünnwandigen, insbesondere aus Blech gebildeten Laufscheiben angeordnet ist, wobei wenigstens eine Laufscheibe an einer peripheren Kante in einen axial gerichteten Kragen übergeht, bekannt. Die an einem peripheren Ende gegeneinandergerichteten Kragen der Laufscheiben sind so aufeinander abgestimmt, daß ein umlaufender Ringspalt entsteht, in dem ein Bord des Käfigs geführt ist.

Durch diese Maßnahme soll erreicht werden, daß sich der Käfig bei Rotation des Axiallagers zwischen den Laufscheiben frei drehen kann und bei Abheben bzw. bei

Wiederannähern einer Scheibe die im Lager auftretenden Kräfte nicht übe r den gesamten Käfig, sondern nur zwischen Käfigbord und den beiden axial gerichteten Kragen der Laufscheiben übertragen werden. Dadurch soll nicht nur der Verschleiß verringert, sondern auch die Standzeit eines solchen Lagers mit filigranem Käfig beträchtlich erhöht werden. Allerdings ist die Käfig -Drehzahl nicht unabhängig von den relativen Drehzahlen der Anlaufscheiben, wodurch die Standzeit wieder reduziert wird. Die insbesondere für Automobilgetriebe vorgesehenen Lager sollen zudem so gestaltet sein, daß die Laufscheiben und der Käfig durch formschlüssiges Hintergreifen zu einer Baueinheit zusammengefasst sind. Durch ein solch komplettes Bauteil werde der Montagevorgang wesentlich erleichtert.

Es hat sich gezeigt, daß derartige Axiallager aber keine ra dialen Lasten aufnehmen können, sondern es müssen dafür separate Radiallager angeordnet werden. Auch ist die Käfig-Drehzahl nicht unabhängig von den relativen Drehzahlen der Anlaufscheiben, wodurch die Standzeit wieder reduziert wird.

Von daher liegt der Erfindung das Problem zugrunde, ein Axiallager vorzuschlagen, mit dem wenigstens geringe Radiallasten übertragbar sind.

Das Problem wird erfindungsgemäß durch die Merkmale des Gegenstandes des Anspruches 1 gelöst. Weiterbildungen der Erfindung sind in den Unteransprüchen erfasst.

Das gattungsgemäße Axialwälzlager weist generell mindestens an einem peripheren Rand der Laufscheibe mindestens einen Kragen auf und dieser ist mit der anderen Laufscheibe so aufeinander abgestimmt, daß ein umlaufender Ringspalt entsteht, in dem ein Zwischenring angeordnet ist. Der Zwischenring ermöglicht es, eine über die Laufscheiben eingebrachte Radiallast abzustützen, soweit diese materialbedingte spezifische Grenz-Kennwerte der Belastbarkeit des Ringes nicht übersteigt.

In einer bevorzugten Ausführungsform wird dabei zur Materialersparnis an den inneren Rändern bzw. deren Innendurchmesser an beiden Laufscheiben ein Kragen angeordnet, es können erfindungsgemäß aber auch der oder die Kragen außenseitig zu den Nadelrollenkäfigen angeordnet sein.

Während ein Kragen an einer Laufscheibe, beispielsweise an deren Innendurchmesser, mit dem Rand der anderen Laufscheibe zusammen einen Ringspalt bilden kann, wird in einer bevorzugten Ausführungsform jede der beiden Laufscheiben zur Bildung eines Ringspaltes mit einem Kragen versehen.

Ein herausragender Vorteil einer derartigen Anordnung besteht in der Möglichkeit, das Axiallager als Zentrierung in radialer Richtung zu benutzen. Derartige Zentrierfunktionen können nur übernommen werden, wenn beding t Radialkräfte aufgenommen werden können. Zwar wird im Stand der Technik schon behauptet, es könnten mit den zitierten Lagern Zentrieraufgaben erfüllt werden, dies gelang aber nur unter Inkaufnahme höheren Verschleißes und von Laufgeräuschen.

Der Zwischenring sollte in vorteilhaften Ausführungsformen aus Material bestehen, ausgewählt aus der Gruppe, umfassend Sinterbronze, Messing, hoch wärmebeständige und verschleißarme Kunststoffe aus Polyimid, insbesondere Vespel ^{®} oder Torlon^{®} und PTFE, insbesondere Teflon^{®}. Die genannten thermoplastischen Materialen haben in Versuchen die nötige Langlebigkeit gezeigt, um als Teil eines zentrierenden Lager - Elements in Automatikgetrieben insbesondere von Kraftfahrzeugen verwendet zu werden.

Von Sinterbronze und Messing sind die Eigenschaften als Lagermetall dem Fachmann geläufig; dieses Material wird bei höheren Radiallasten verwendet. Neu ist auch deren Verwendung für den vorgenannten Zweck. Insbesondere geeignet als Material für den Zwischenring sind Sintermaterialien deshalb, weil durch ihre poröse Struktur Ölfluß und Kühlung verbessert werden, indem sie wie ein rotierender Schwamm die Kühl - bzw. Schmierflüssigkeit aufsaugen und abgeben.

Dies gilt in gleicher Weise für die im Maschinenbau seit längerem benutzten Bauteile aus hoch wärmebeständigen und verschleißarmen Kunststoffen Vespel^{®} (Marke der Firma E.I. DuPont de Nemours and Co. US) oder Torlon^{®} (Marke der Firma Solvay Advanced Polymers, L.L.C., US). Dies sind Thermoplaste aus Polyimid mit geeigneten Füllstoffen zur Verbesserung der thermischen und abrasiven Eigenschaften, die ein Einstellen auf die Bedingungen zum Beispiel für den Einsatz in Fahrzeuggetrieben zulassen. Ebenfalls geeignet ist Teflon^{®} (Marke der Firma E.I. DuPont de Nemours and Co. US) mit entsprechenden Füllstoffen. Der Fachmann kann dem Zweck entsprechend die Füllstoffe wie beispielsweise Graphit in geeigneter Menge dem Kunststoff beimengen.

In einer bevorzugten Ausführung ist der Zwischenring mit einem etwa quadratischen Querschnitt ausgebildet, hat also ein Höhen-Breiten-Verhältnis von 1. Es können jedoch auch dünnere Zwischenringe bis zu einem Verhältnis von etwa 5% benutzt werden.

Es sind auch Ausführungsformen möglich, bei denen der Zwischenring nicht separat ausgebildet ist, sondern mit einer Laufscheibe bzw. einem Kragen verbunden ist. Diese Verbindung bzw. der Ring kann auch als Beschichtung eines Kragens ausgeformt sein. Je nach dem vom Fachmann verwendeten Material, seiner Wärmebeständigkeit und Verschleißfestigkeit und der Höhe der auftretenden Radiallasten, stellt sich, ausgehend von einem Spiel Null bei Raumtemperatur, bei einer Betriebstemperatur bis max. 250 °C ein durch Abrieb und Dehnung entstehendes Spiel von 0,01 bis etwa 1 mm ein. Erfindungsgemäß soll das Spiel auf 0,005 bis 0,9 mm, vorzugsweise jedoch auf 0,01 bis 0,05 mm begrenzt sein. Je dünner der Zwischenring gewählt wird, desto größer ist das Spiel im Rahmen der oben angegeben Bemessungsregel. Je höher die Radiallast desto fester sollte das Material sein; für relativ hohe Lasten ist dabei metallisches Zwischenringmaterial, vorzugsweise Sinter-Bronze, von Vorteil.

Die Vorteile und der Zweck der Erfindung werden aus der nachfolgend beschriebenen Zeichnung eines Ausführungsbeispiels noch deutlicher. Es zeigen:
- Fig. 1: eine Explosionsdarstellung der wesentlichen Teile eines erfindungsgemäßen Axialwälzlagers;
- Fig. 2: das Lager gemäß Fig. 1 im Teilschnitt nach den Zusammenbau mit Darstellung der Krafteinleitung bei Axiallast;
- Fig. 3: das Lager gemäß Fig. 1 im Teilschnitt nach den Zusammenbau mit Darstellung der Krafteinleitung unter Radiallast,
- Fig. 4: den Teilschnitt eines Lagers mit einem Kragen am äußeren Rand; und
- Fig. 5: den Teilschnitt eines Lagers mit Kragen an äußeren und inneren Rand und mit zwei Zwischenringen.

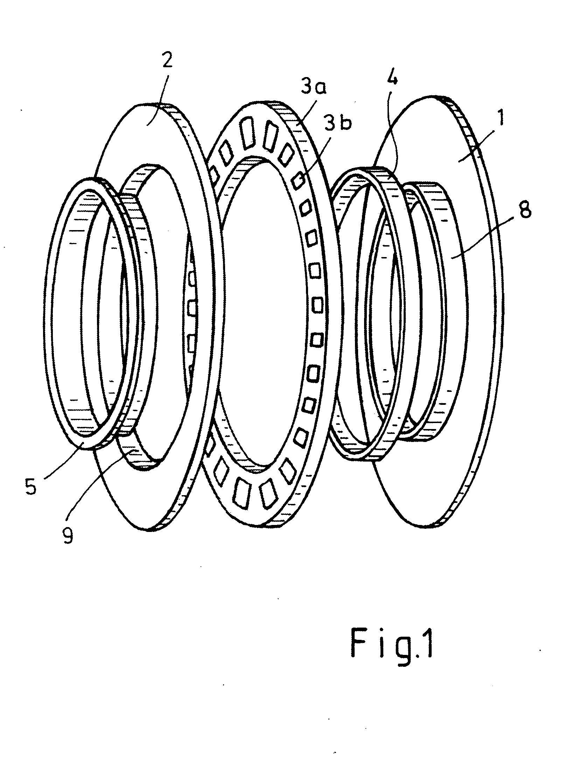

Die in den Figuren 1 bis 5 gezeigten Zwischenringe entsprechen nicht der Ausführungsform nach Anspruch 1.

Fig. 1 zeigt in Perspektive ein erfindungsgemäßes Axial-Nadelrollenlager vor dem Zusammenbau. Eine Laufscheibe 1 aus Stahlblech weist an ihrem inneren peripheren Rand einem Kragen 8 auf, auf den ein Zwischenring 4 aus dem Kunststoff Vespel^{®} aufstülpbar ist. Ein Nadelrollenkäfig 3a mit Taschen weist in den Taschen Lagerrollen 3b zum Abwälzen auf den Laufscheiben 1, 2 auf. Auf eine Laufscheibe 2 mit Kragen 9 an ihrem inneren Rand kann dieser Nadelrollenkäfig 3a aufgestülpt werden. Die Deckscheibe 5 wird nach Zusammenfügen der Bauteile 1 bis 4 über den Kragen 8 geschoben und sichert so die Lage des Zwischenringes 4.

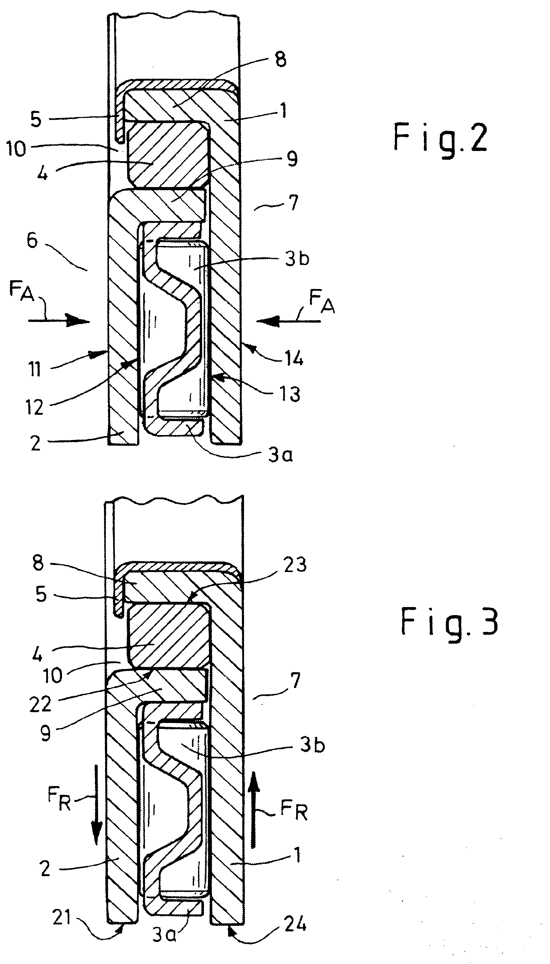

Diese Montagesituation zeigen die Fig. 2 und 3 im Teilschnitt. Der Zwischenring 4 sitzt innerhalb des Käfigs in einem Ringspalt 10 zwischen den Kragen 8 und 9 und hat dort kein Spiel. Der Nadelrollenkäfig 3a mit Rollen 3b ist in axialer Richtung von den Laufscheiben 1, 2 mit den Abrollflächen 12, 13 und in radialer Richtung nach innen vom Kragen 9 umgeben. Außenseitig ist die Laufscheibe 1 auf einem Absatz eines nicht dargestellten Bauteils 7 gelagert, während Laufscheibe 1 in ähnlicher Weise mit dem nicht dargestellten Bauteil 6 verbunden ist. Das Axiallager überträgt bei Relativbewegung der Bauteile 6, 7 Axialkräfte FA vom Bauteil 7 über eine gemeinsame Anlagefläche 14 an die mit ihm gekoppelte Laufscheibe 1 und weiter über die Abrollfläche 13 und die Rollen 3b auf die Abrollfläche 12 der Laufscheibe 2 sowie die Koppelfläche 11 zu dem Bauteil 6, so daß eine Reaktionskraft FA auch dort entsteht.

Fig. 3 zeigt dieselbe Situation wie in Fig. 2, jedoch unter Darstellung der Übertragung einer Radiallast FR, welche in beiden gezeigten Richtungen radial nach außen bzw. innen an beiden Laufscheiben 1, 2 über die Bauteile 6, 7 übertragen werden könnte, z. B. vom Kragen 8 über den Zwischenring 4 im Ringspalt 10 an der Koppelfläche 23, über die Koppelfläche 22 weiter zur Laufscheibe 2 bzw. deren Kragen 9 und über Koppelfläche oder Anlagefläche 21 zum nicht dargestellten Bauteil 6. Der Vollständigkeit halber ist auch eine Anlagefläche 24 zwischen Laufscheibe 1 und Bauteil 7 dargestellt.

Die Fig. 2, 3 zeigen die Situation eines Axiallagers bei Raumtemperatur, bei der der Ringspalt 10 zwischen den Kragen 8, 9 voll durch den Zwischenring 4 überbrückt wird, ohne Spiel. Bei einer Relativbewegung zwischen den Bauteilen 6, 7 schleift daher der Zwischenring 4 an dem Kragen, er muss daher die bereits beschriebene Verschleißfestigkeit haben. Sobald die Bauteile 6, 7 auf Betriebstemperatur von z.B. 120 °C sind, stellt sich ein Spiel ein.

Im Fall einer derartigen Axiallager-Ausbildung in einem Automatikgetriebe eines Pkw wurde bei Betriebstemperatur für Lagerdurchmesser von 30 bis 100 m m bei der gezeigten Zwischenringgeometrie ein Spiel von etwa 0,15 mm im Mittel gemessen. Die auftretenden Radiallasten bei Verwendung des Lagers als Zentriereinheit wurden unter mehrstündiger Dauerlast ohne nennenswerte Geräuschbildung oder Lagerabrieb übertragen.

Wenn der Zwischenring, z. B. aus dem PTFE -Kunststoff Teflon^{®}, dünner gestaltet wurde und ein Höhen-Breitenverhältnis von nur noch 5 -15% hatte, erbrachten die Tests im Betrieb ein Spiel von etwa 0,3 mm im Ringspalt zwischen den Kragen 8, 9. Getestet wurde auch, den Kragen 8 im verkleinerten Ringspalt, anstelle eines separaten Zwischenringes, nur mit einer Beschichtung aus Sinterbronze zu versehen. Die dabei beschädigungsfrei übertragbaren Radiallasten waren noch höher, jedoch verschlechterte sich die Lauftoleranz. Es entstand im Betrieb ein Ringspalt -Spiel zwischen 0,05 und 0,8 mm.

Die Erfindung in den verschiedenen oben beschriebenen Ausführungen der Zwischenringe hat sich in allen Fällen bewährt.

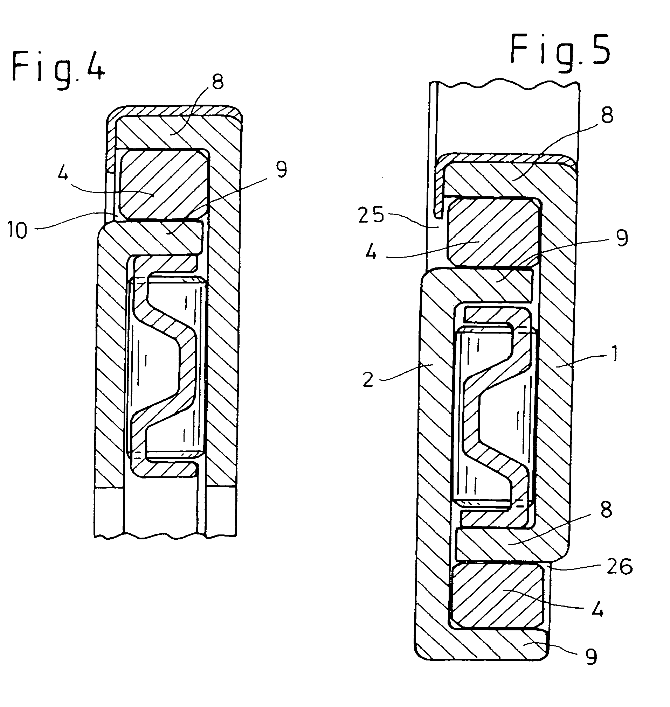

In Fig. 4 ist ein Axiallager gezeigt, das im Aufbau dem Lager aus Fig. 2 und 3 entspricht, wo aber der Ringspalt 10, und damit auch der Zwischenring 4 und die Kragen 8 und 9 am äußeren Umfang des Axiallagers angeordnet sind.

Eine Ausführung des Axiallagers mit zwei Zwischenringen zeigt Fig. 5. Jede Laufscheibe 1 und 2 weist Kragen 8 und 9 sowohl am inneren Radius wie auch am äußeren Radius auf. Es entstehen zwei Ringspalte, ein innerer Ringspalt 25 und ein äußerer Ringspalt 26, in denen jeweils ein Zwischenring 4 angeordnet ist. Auf diese Weise wird die radiale Tragfähigkeit des Lagers gegenüber der Ausführung mit einem Zwischenring 4 noch weiter erhöht.

## Patentansprüche

1. Axialwälzlager, bestehend aus einem Wälzkörper (3b) in Taschen enthaltenden Käfig (3a), der zwischen zwei planparallelen Laufscheiben (1, 2) angeordnet ist, wobei wenigstens eine Laufscheibe (1, 2) an einem ihrer peripheren Ränder in einen axial gerichteten Kragen (8, 9) übergeht und mindestens an dem einen peripheren Rand der einen Laufscheibe (1, 2) mindestens ein Kragen (8, 9) und die andere Laufscheibe (1, 2) so aufeinander abgestimmt sind, daß ein umlaufender Ringspalt (10) entsteht,
**dadurch gekennzeichnet, daß**
im Ringspalt (10) ein Zwischenring (4) angeordnet ist, wobei der Zwischenring (4) mit einer der Laufscheiben (1, 2) verbunden ist indem der Zwischenring (4) als Beschichtung des Kragens (8, 9) einer der Laufscheiben (1, 2) ausgebildet ist.

2. Axialwälzlager nach Anspruch 1,
**dadurch gekennzeichnet, daß**
der innere periphere Rand einer oder beider Laufscheiben (1, 2) einen Kragen (8, 9) aufweist.

3. Axialwälzlager nach Anspruch 1 oder 2,
**dadurch gekennzeichnet, daß**
der äußere periphere Rand einer oder beider Laufscheiben (1, 2) einen Kragen (8, 9) aufweist.

4. Axialwälzlager nach Anspruch 1, 2 oder 3,
**dadurch gekennzeichnet, daß**
zumindest ein Ringspalte (10) zwischen den Kragen (8, 9) an beiden Laufscheiben (1, 2) gebildet ist.

5. Axialwälzlager nach einem der vorhergehenden Ansprüche,
**dadurch gekennzeichnet, daß**
der Zwischenring (4) aus einem Material besteht, ausgewählt aus der Gruppe, umfassend, Sintermetall, insbesondere Sinterbronze, Lagerbronze, Messing, hoch wärmebeständige und verschleißarme Kunststoffe aus Polyimid, insbesondere Vespel^{®} oder Torlon^{®} und PTFE, insbesondere Teflon^{®}.

6. Axialwälzlager nach einem der vorhergehenden Ansprüche,
**dadurch gekennzeichnet, daß**
der Zwischenring (4) ein Höhen-Breitenverhältnis von 1 nicht übersteigt.

7. Axialwälzlager nach einem der vorhergehenden Ansprüche,
**dadurch gekennzeichnet, daß**
für Anwendungen an Bauteilen mit höheren Betriebstemperaturen ein radiales Spiel im Ringspalt (10) bei eingefügtem Zwischenring (4) so eingestellt ist, daß es bei Raumtemperatur Null und bei Betriebstemperatur etwa zwischen 0,005 und 0,9 mm, vorzugsweise etwa 0,01 bis 0,05 mm beträgt.

8. Verwendung eines Axialwälzlagers nach einem der vorhergehenden Ansprüche als radial zentrierendes Lager-Element (1, 10) in Automatikgetrieben insbesondere von Fahrzeugen.

## Claims

1. Roller thrust bearing, consisting of a cage (3a) containing rolling elements (3b) in pockets, which cage (3a) is arranged between two plane-parallel washers (1, 2), at least one washer (1, 2) developing at one of its peripheral edges into an axially directed collar (8, 9) and, at least at the one peripheral edge of the one washer (1, 2), at least one collar (8, 9) and the other washer (1, 2) being so matched to one another that a circumferential annular gap (10) is formed, **characterized in that** an intermediate ring (4) is arranged in the annular gap (10), the intermediate ring (4) being joined to one of the washers (1, 2) by forming the intermediate ring (4) as a coating for the collar (8, 9) of one of the washers (1, 2).

2. Roller thrust bearing according to Claim 1, **characterized in that** the inner peripheral edge of one or both washers (1, 2) comprises a collar (8, 9).

3. Roller thrust bearing according to Claim 1 or 2, **characterized in that** the outer peripheral edge of one or both washers (1, 2) comprises a collar (8, 9).

4. Roller thrust bearing according to Claim 1, 2 or 3, **characterized in that** at least one annular gap (10) is formed between the collars (8, 9) on the two washers (1, 2).

5. Roller thrust bearing according to one of the preceding claims, **characterized in that** the intermediate ring (4) consists of a material selected from the group comprising sintered metal, in particular sintered bronze, bearing bronze, brass, highly heat-resistant and low-wear plastics comprising polyimide, in particular Vespel® or Torlon®, and PTFE, in particular Teflon®.

6. Roller thrust bearing according to one of the preceding claims, **characterized in that** the intermediate ring (4) does not exceed a height/width ratio of 1.

7. Roller thrust bearing according to one of the preceding claims, **characterized in that**, for applications involving components with relatively high operating temperatures, radial play in the annular gap (10) is so adjusted, when the intermediate ring (4) is inserted, that it amounts to zero at room temperature and to approximately between 0.005 and 0.9 mm, preferably approximately 0.01 to 0.05 mm, at operating temperature.

8. Use of a roller thrust bearing according to one of the preceding claims as a radially centring bearing element (1, 10) in automatic transmissions in particular for vehicles.

## Revendications

1. Palier de roulement axial constitué d'une cage (3a) qui contient des corps de roulement (3b) disposés dans des poches et qui est agencé entre deux disques rotatifs (1, 2) situés dans des plans parallèles, au moins un disque rotatif (1, 2) se transformant sur un de ses bords périphériques en un collet (8, 9) orienté axialement et au moins un collet (8, 9) et l'autre disque rotatif (1, 2) étant accordés l'un à l'autre sur au moins un bord périphérique d'un des disques rotatifs (1, 2) de manière à former un interstice périphérique annulaire (10),
**caractérisé en ce qu'**un anneau intermédiaire (4) est disposé dans l'interstice annulaire (10) et **en ce que** l'anneau intermédiaire (4) est relié à l'un des disques rotatifs (1, 2) par le fait que l'anneau intermédiaire (4) est configuré comme revêtement du collet (8, 9) de l'un des disques rotatifs (1, 2).

2. Palier de roulement axial selon la revendication 1, **caractérisé en ce que** le bord périphérique intérieur d'un des deux disques rotatifs (1, 2) présente un collet (8, 9).

3. Palier de roulement axial selon les revendications 1 ou 2, **caractérisé en ce que** le bord périphérique extérieur d'un ou des deux disques rotatifs (1, 2) présente un collet (8, 9).

4. Palier de roulement axial selon les revendications 1, 2 ou 3, **caractérisé en ce qu'**au moins un interstice annulaire (10) est formé entre le collet (8, 9) des deux disques rotatifs (1, 2).

5. Palier de roulement axial selon l'une des revendications précédentes, **caractérisé en ce que** l'anneau intermédiaire (4) est constitué d'un matériau sélectionné dans l'ensemble qui comprend les métaux frittés, en particulier le bronze fritté, le bronze de palier, l'étain, les matériaux qui résistent aux hautes températures et à l'usure, en polyimide, en particulier en Vespel^{®} ou Toron^{®} ou en PTFE, en particulier en Téflon^{®}.

6. Palier de roulement axial selon l'une des revendications précédentes, **caractérisé en ce que** le rapport entre la hauteur et la largeur de l'anneau intermédiaire (4) ne dépasse pas 1.

7. Palier de roulement axial selon l'une des revendications précédentes, **caractérisé en ce que** pour des applications sur des composants qui présentent une haute température en fonctionnement, le jeu radial dans l'interstice annulaire (10) après insertion de l'anneau intermédiaire (4) est ajusté de manière à être nul à température ambiante et être compris entre environ 0,005 et 0,9 mm et de préférence entre environ 0,01 et 0,05 mm à température de fonctionnement.

8. Utilisation d'un palier de roulement axial selon l'une des revendications précédentes comme élément de palier (1, 10) à centrage radial dans des transmissions automatiques, en particulier de véhicules.
